# EUROPEAN PATENT APPLICATION

(11) **EP 3 263 883 A1**
(43) Date of publication of application: **03.01.2018**
(21) Application number: 17179086.8
(22) Date of filing: 30.06.2017
(51) Int. Cl.: F02M 35/104, F02M 35/10

(54) **INTAKE MANIFOLD**

(30) Priority: 01.07.2016 JP 2016131628
(71) Applicant: Aisin Seiki Kabushiki Kaisha, Aichi 448-8650 (JP)
(72) Inventor: TOMITA, Akifumi, Kariya-shi, Aichi-ken, 448-8650 (JP); YANO, Hideto, Kariya-shi, Aichi-ken, 448-8650 (JP)
(74) Representative: Intès, Didier Gérard André

(57) **Abstract**

An intake manifold includes: a surge tank portion (2) to which intake air is supplied from an introducing port (11) and which distributes the intake air to each intake passage (3) from branch ports (21) juxtaposed in one direction. In the surge tank portion (2), the branch port opens (21) so that a center (P) thereof is positioned apart from a center line (01) of the introducing port (11) extending along an opening direction of the introducing port (11) by a distance (LN) in a direction perpendicular thereto. One inner wall surface (23a) has an inclined portion (24) connecting between the introducing port (11) and the branch ports (21). In the inclined portion, a protruding portion (25), whose top portion extends from the introducing port (11) and is positioned within a range of the introducing port (11), and whose protruding length gradually decreases in directions opposite to each other from the top portion, is protruded.

## Description

### TECHNICAL FIELD

This disclosure relates to an intake manifold for distributing intake air to each cylinder of an internal combustion engine.

### BACKGROUND DISCUSSION

In the related art, for example, an intake manifold described in JP 2012-97567A (Reference 1) is known. The intake manifold includes a surge tank to which intake air is supplied from an inlet to which a throttle valve is connected, and a plurality of outlet pipes (intake passages) which extend from a bottom portion of the surge tank toward an engine side, pass through an upward curved portion, and rise to face the surge tank. An intake guide surface, which receives the intake air from an opening and closing side of the throttle valve to guide the intake air to an outside inner wall side that is a side opposite to the outlet pipe side, is formed on an inside inner wall that is an outlet pipe side of an inlet region. Therefore, it is said that the intake air flowing from the throttle valve flows smoothly into the outlet pipes and the intake efficiency improves.

However, such an intake manifold does not take into consideration of distribution properties of the intake air to the plurality of outlet pipes.

Thus, a need exists for an intake manifold that can improve distribution properties while improving intake efficiency.

### SUMMARY

An intake manifold according to an aspect of this disclosure includes a surge tank portion to which intake air is supplied from an introducing port and which distributes the intake air to each intake passage from a plurality of branch ports juxtaposed in one direction. In the surge tank portion, each of the branch ports opens so that a center thereof is positioned apart from a center line of the introducing port extending along an opening direction of the introducing port by a predetermined distance in a direction perpendicular thereto when viewed in a juxtaposed direction of the branch ports. One inner wall surface, which is positioned in a direction opposite to a direction in which the center of the branch port is apart from the center line of the introducing port, has an inclined portion extending between and connecting the introducing port and all the plurality of branch ports. In the inclined portion, a protruding portion, whose top portion extends from the introducing port toward the branch port and is positioned within a range of the introducing port in the juxtaposed direction of the branch ports, and whose protruding length gradually decreases in directions opposite to each other from the top portion in the juxtaposed direction of the branch ports, is protruded.

According to this configuration, the inclined portion is inclined from the introducing port toward each branch port so that the intake air is supplied to each branch port in a state where the flow of the intake air flowing from the introducing port is guided. Therefore, it is possible to improve the intake efficiency. In addition, the protruding portion protruding to the inclined portion extends from the introducing port toward the branch port and the top portion is formed within the range of the introducing port in the juxtaposed direction of the branch ports. Therefore, it is possible to improve distribution properties of the intake air flowing in from the introducing port to the plurality of branch ports (intake passages).

In the intake manifold, it is preferable that the branch ports open along a direction in which the inclined portion is inclined.

According to this configuration, the inclined portion can guide the flow of the intake air to the branch port without bending the flow thereof.

In the intake manifold, it is preferable that the top portion extends toward a portion between adjacent two branch ports.

According to this configuration, it is possible to prevent the intake air flowing in from the introducing port and flowing to the branch port from colliding with a portion between adjacent two branch ports.

According to the aspect of this disclosure, it is possible to improve the distribution properties while improving the intake efficiency.

### BRIEF DESCRIPTION OF THE DRAWINGS

The foregoing and additional features and characteristics of this disclosure will become more apparent from the following detailed description considered with the reference to the accompanying drawings, wherein:
Figs. 1A to 1D are respectively a perspective view, a front view, a plan view, and a side view illustrating a structure of an intake manifold of an embodiment;
Figs. 2A and 2B are respectively sectional views that are taken along line 2A-2A of Fig. 1D and line 2B-2B of Fig. 1C, and Fig. 2C is a sectional view that is taken along line 2C-2C of Fig. 2B; and
Figs. 3A to 3C are respectively sectional views that are taken along line 3A-3A, 3B-3B, and 3C-3C of Fig. 1B.

### DETAILED DESCRIPTION

Hereinafter, an embodiment of an intake manifold will be described with reference to the drawings.

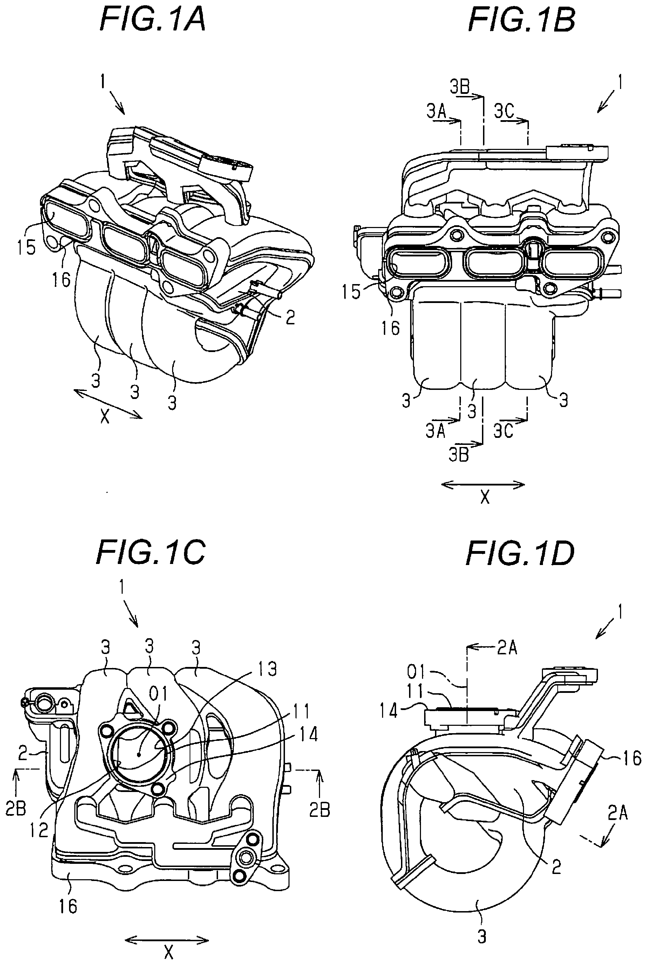

As illustrated in Figs. 1A to 1D, an intake manifold 1 provided in an in-line three-cylinder engine (not illustrated) for a vehicle has a surge tank portion 2 and a plurality (three) of intake passages 3 branched from an outlet side of the surge tank portion 2. The intake manifold 1 is a so-called surge tank integrated-type intake manifold integrally including the surge tank portion 2 and the plurality of intake passages 3 by, for example, three resin pieces joined by vibration welding or the like. Hereinafter, a juxtaposed direction of the plurality of intake passages 3 is referred to as an X direction.

An introducing port 11 is formed on an inlet side in the surge tank portion 2. The introducing port 11 forms a substantially cylindrical inner wall surface 12 extending along a center line O1 in one direction (direction orthogonal to a paper surface in Fig. 1 C) orthogonal to the X direction and a substantially annular flange portion 14 protruding outward from an outer peripheral portion of an opening 13 of the introducing port 11. The flange portion 14 is provided for connecting to a throttle body (not illustrated) which holds a throttle valve or the like.

A substantially annular flange portion 16 protruding outward from an outer peripheral portion surrounding entire openings 15 on an outlet side thereof is formed in the plurality of intake passages 3. The flange portion 16 is provided for connecting to a cylinder head (not illustrated).

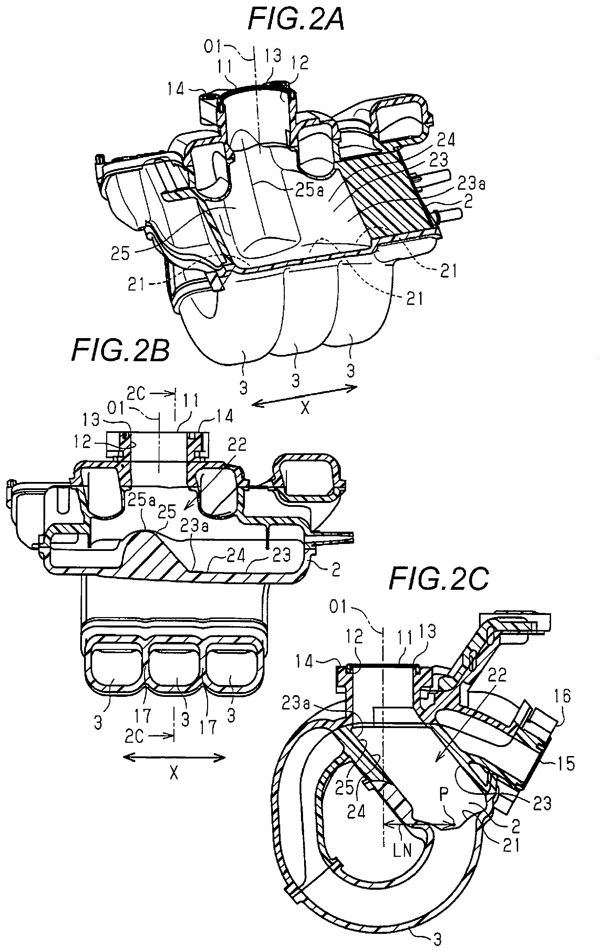

As illustrated in Figs. 2A to 2C, in the surge tank portion 2, a plurality of branch ports 21 which are inlets of the plurality of intake passages 3 are juxtaposed on an outlet side thereof in the X direction. Each branch port 21 opens so as to be positioned apart from the center line O1 in which a center P thereof extends in an opening direction of the introducing port 11 by a predetermined distance LN in a direction orthogonal thereto when viewed in the X direction (direction orthogonal to a paper surface in Fig. 2C). Moreover, the plurality of intake passages 3 are formed so as to be in close contact with each other in the vicinity of the branch port 21 in the X direction.

The surge tank portion 2 has an inner wall surface 23 which forms an inner space 22 that is a passage cross-sectional area larger than a passage cross-sectional area of the introducing port 11. That is, the inner wall surface 23 extends to both sides in the X direction with the introducing port 11 interposed therebetween and, for example, an opening width in the X direction is set to be greater than a dimension obtained by combining the plurality of intake passages 3 in the vicinity of the branch ports 21.

A planar inclined portion 24 connecting between the introducing port 11 and all the plurality of branch ports 21 is formed on one inner wall surface 23a positioned in a direction opposite to a direction in which the center P of the branch port 21 is apart from the center line O1 of the introducing port 11 in the inner wall surface 23. The inclined portion 24 is inclined at a predetermined angle with respect to the center line O1 such that the center line O1 of the introducing port 11 intersects.

A protruding portion 25 protrudes from the inclined portion 24 in a direction orthogonal thereto. A cross-sectional shape of the protruding portion 25 has a substantially triangular shape in which a protruding length gradually decreases from a top portion 25a toward the opposite X direction (rightward and leftward direction in Fig. 2B). That is, in the cross-sectional shape of the protruding portion 25, the right side of the top portion 25a in the drawing is inclined in a substantially straight line at a predetermined angle and the left side of the top portion 25a in the drawing is curved in a substantially upward parabolic shape.

The top portion 25a is positioned within a range of an opening of the introducing port 11 in the X direction. In addition, the top portion 25a coincides with a position on one side of a partition wall 17 (partition wall 17 on the left side in Fig. 2B) that partitions the intake passages 3 adjacent to each other in the vicinity of the branch port 21 in the X direction. That is, the top portion 25a extends toward between (the partition wall 17) adjacent two branch ports 21.

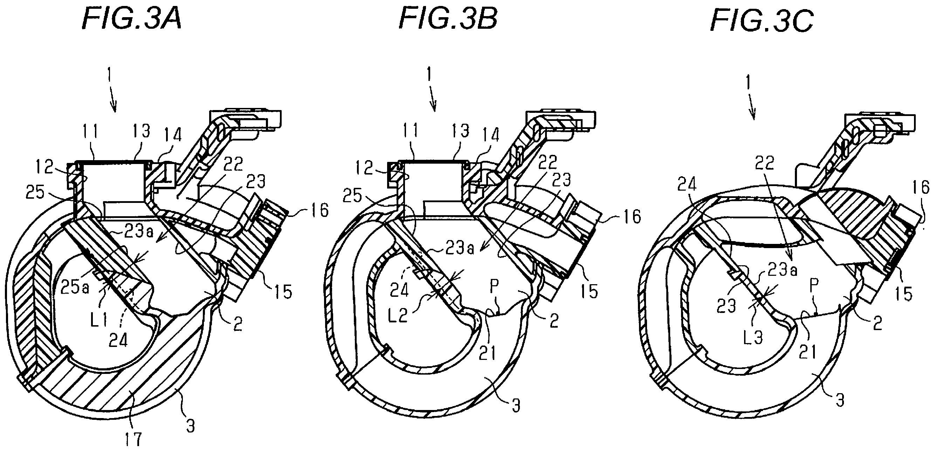

As illustrated also in Figs. 3A to 3C, the protruding portion 25 extends from the introducing port 11 toward the branch port 21 in a direction orthogonal to the X direction, and the top portion 25a thereof extends toward the partition wall 17 which is described above substantially parallel to the inclined portion 24. A protruding length L of the protruding portion 25 gradually decreases from the top portion 25a toward the opposite direction in the X direction. More specifically, as illustrated in Fig. 3A, at the position of the top portion 25a, the protruding length L of the protruding portion 25 is the maximum protruding length L1. In addition, as illustrated by a change to Fig. 3B, at a position displaced from the top portion 25a at a predetermined distance in the X direction, the protruding length L of the protruding portion 25 is a protruding length L2 smaller than the protruding length L1. Furthermore, as illustrated by a change to Fig. 3C, at a position which is a base end of the protruding portion 25 by being further displaced at a predetermined distance in the X direction, the protruding length L of the protruding portion 25 is the minimum protruding length L3 (=0).

At each branch port 21, the intake passage 3 connected to the surge tank portion 2 along the inclined portion 24 is bent in the clockwise direction in Figs. 3A to 3C so as to be folded back toward the introducing port 11 side and passes through the introducing port 11 on the right side in Figs. 3A to 3C. The opening 15 (flange portion 16) thereof is disposed on the cylinder head side.

The intake manifold 1 having such a configuration guides and distributes the intake air flowing into the surge tank portion 2 with the inclined portion 24 and the protruding portion 25 and supplies the intake air to a combustion chamber (not illustrated) of an engine provided at an end of each intake passage 3.

Next, an operation of the embodiment and effects thereof will be described.
(1) In the embodiment, the inclined portion 24 is inclined from the introducing port 11 toward each branch port 21. Therefore, since the intake air is supplied to each branch port 21 in a case where the flow of the intake air flowing from the introducing port 11 is guided, it is possible to improve the intake efficiency. In addition, the protruding portion 25 formed at the inclined portion 24 extends from the introducing port 11 toward the branch port 21 and the top portion 25a is formed within the range of the opening of the introducing port 11 in the juxtaposed direction (X direction) of the branch ports 21. Therefore, it is possible to improve distribution properties in the X direction of the intake air flowing in from the introducing port 11. Therefore, the inclined portion 24 can improve the distribution properties while improving the intake efficiency.
(2) In the embodiment, the top portion 25a extends toward between the adjacent two branch ports 21 (partition wall 17). Therefore, it is possible to prevent the intake air flowing in from the introducing port 11 and flowing to the branch port 21 from colliding with the partition wall 17.
(3) In the embodiment, in the cross-sectional shape of the protruding portion 25, the right side of the top portion 25a illustrated in Fig. 2B is inclined in a substantially straight line at a predetermined angle and the left side of the top portion 25a illustrated in Fig. 2B is curved in a substantially upward parabolic shape. Therefore, it is possible to more uniformly distribute the intake air in the X direction by making the cross-sectional shape of the protruding portion 25 asymmetrical about the top portion 25a.
(4) In the embodiment, the protruding length gradually decreases from the top portion 25a of the protruding portion 25 toward the opposite X direction. In other words, it is possible to gradually increase the inner space 22 (that is, volume) of the surge tank portion 2 as toward the opposite X direction from the top portion 25a of the protruding portion 25. Therefore, the intake air flowing in the inner space 22 easily flows in a direction in which the volume gradually increases as compared to a case where a uniform inner space is formed in the X direction. Therefore, in the plurality of branch ports 21 having different separation distances from the introducing port 11 in the X direction, the intake air is distributed depending on the separation distance to the introducing port 11. Therefore, the inner space 22 can improve the distribution properties while improving the intake efficiency by changing the volume thereof.

The embodiment may be modified as follows.

In the embodiment, the branch port may be opened so that the inclined portion 24 is inclined along the direction thereof. That is, it may be a branch port whose center line extends in parallel to the inclined direction of the inclined portion 24 along the top portion 25a. In this case, the inclined portion 24 can guide the flow of the intake air to the branch port without bending and it is possible to suppress a decrease in the intake efficiency.

In the embodiment, in the cross-sectional shape of the protruding portion 25, the right side of the top portion 25a illustrated in Fig. 2B may not be inclined in a substantially straight line at a predetermined angle and the left side of the top portion 25a illustrated in Fig. 2B may not be curved in a substantially upward parabolic shape. That is, the cross-sectional shape of the protruding portion 25 may be a bow shape (circular arc, upward parabola, or the like) having a top portion, or a triangular shape. Alternatively, a pair of right and left downward parabolas may be combined so as to have a top portion.

In the embodiment, the protruding portion 25 may be formed only within the range of the opening of the introducing port 11.

In the embodiment, the top portion 25a of the protruding portion 25 may not coincide with the position of the partition wall 17 in the X direction.

In the embodiment, the intake manifold 1 may be a metal material instead of a resin material.

In the embodiment, the number of cylinders of the engine is arbitrary as long as it has a plurality of cylinders and the intake manifold 1 may have a number of the intake passages matching the number of cylinders.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention as defined by the claims. Accordingly, it is expressly intended that all such variations, changes and equivalents which fall within the scope of the present invention as defined in the claims, be embraced thereby.

## Claims

1. An intake manifold (1) comprising:
a surge tank portion (2) to which intake air is supplied from an introducing port (11) and which distributes the intake air to each intake passage (3) from a plurality of branch ports (21) juxtaposed in one direction (X),
wherein in the surge tank portion (2), each of the branch ports (21) opens so that a center (P) thereof is positioned apart from a center line (O1) of the introducing port (11) extending along an opening direction of the introducing port (11) by a predetermined distance (LN) in a direction perpendicular thereto when viewed in a juxtaposed direction (X) of the branch ports (21),
wherein one inner wall surface (23a), which is positioned in a direction opposite to a direction in which the center (P) of the branch port (21) is apart from the center line (O1) of the introducing port (11), has an inclined portion (24) extending between and connecting the introducing port (11) and all the plurality of branch ports (21), and
wherein in the inclined portion (24), a protruding portion (25), whose top portion (25a) extends from the introducing port (11) toward the branch port (21) and is positioned within a range of the introducing port (11) in the juxtaposed direction (X) of the branch ports (21), and whose protruding length (L1, L2, L3) gradually decreases in directions opposite to each other from the top portion (25a) in the juxtaposed direction (X) of the branch ports (21), is protruded.

2. The intake manifold according to claim 1,
wherein the branch ports (21) open along a direction in which the inclined portion (24) is inclined.

3. The intake manifold according to claim 1 or 2,
wherein the top portion (25a) extends toward a portion between adjacent two branch ports (21).
